# EUROPEAN PATENT APPLICATION

(11) **EP 1 762 758 A1**
(43) Date of publication of application: **14.03.2007**
(21) Application number: 06017398.6
(22) Date of filing: 22.08.2006
(51) Int. Cl.: F16J 15/32

(54) **Rotation shaft seal**

(30) Priority: 07.09.2005 JP 2005259613
(71) Applicant: Mitsubishi Cable Industries, Ltd., Chiyoda-ku Tokyo 100-8303 (JP)
(72) Inventor: Baba, Takeshi, Minoshima Factory of, Arida-shi Wakayama (JP)
(74) Representative: HOFFMANN EITLE

(57) **Abstract**

A rotation shaft seal provided with a rubber sealing portion (5) having a sliding portion (23) which contacts a surface of a rotation shaft (20) and a supporting metal (8) which supports the rubber sealing portion (5) on a low-pressure side. The sliding portion (23) deforms along a peripheral direction of the surface of the rotation shaft (20) as to be concavo-convex wave form when receiving pressure.

## Description

This invention relates to a rotation shaft seal, especially, a rotation shaft seal used to seal high-pressure fluid such as gas.

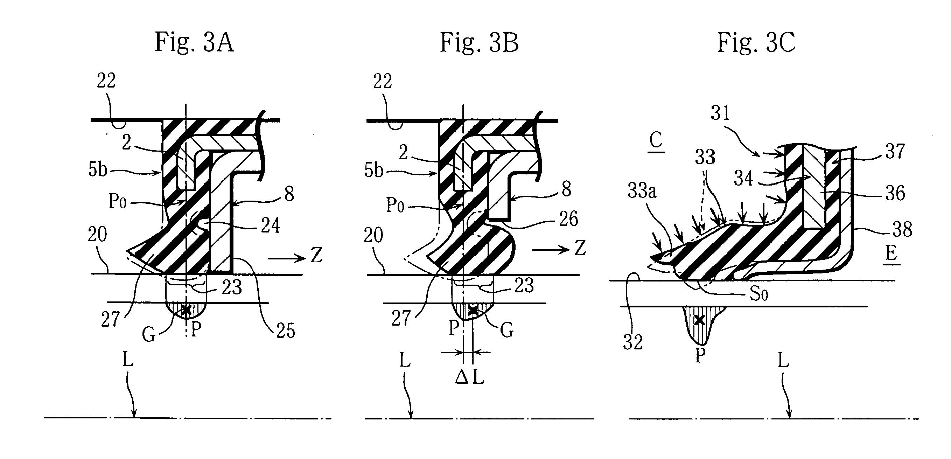

Conventionally, a rotation shaft seal 31 as shown in Figure 3C, having a rubber lip portion 33, is used (refer to Japanese patent provisional publication No. 2003-097723). A rubber member 37, surrounding an inner brim portion 36 of an outer case 34, and the inner brim portion 36 are united by adhesion or baking, and the rubber lip portion 33 composed of a part of the rubber member 37 is supported on a low-pressure side E and an inner peripheral face side (back side) by a supporting metal 38 L-shaped in cross section.

A lip end portion 33a is greatly extended toward a sealed fluid side (high-pressure side) C and the lip portion 33 is formed as a cylinder of which center is an axis L of a rotation shaft 32.

When pressure increases on a sealed fluid chamber(high-pressure) side, the lip portion 33 in free state shown with a two-dot broken line in Figure 3C is compressed and deformed, and high contact pressure P is generated on a sliding portion So on the rotation shaft 32. By the high contact pressure P, the lip end portion 33a is rapidly abraded on the sliding portion So and fluid leakage is generated.

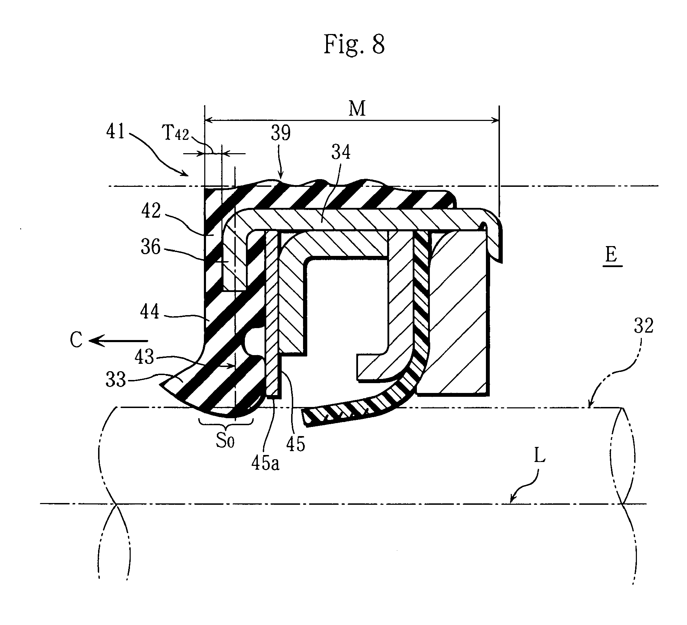

To solve this problem, a group of inventors including the inventor of the present invention proposed a rotation shaft seal 41 as shown in Figure 8 (refer to Japanese patent provisional publication No. 2004-353765).

That is to say, this is a rotation shaft seal provided with a rubber sealing portion 39 having a sliding portion So which contacts a surface of the rotation shaft 32 and an outer case 34 of metal to which the rubber sealing portion 39 is unitedly fixed. The outer case 34 has an inner brim portion 36 on an inner end portion on the sealed fluid side (high-pressure side C), the inner brim portion 36 is covered by the rubber sealing portion 39, and the sliding portion So is disposed within a dimension M of the outer case 34 in axis direction including a thickness dimension T₄₂ of a rubber covering layer 42 covering the inner brim portion 36 on the sealed fluid side. The lip portion 33 is not extended toward the high-pressure side (sealed fluid side) C as shown in Figure 3C, and the sliding portion So is disposed on or near an axis-orthogonal face 43 including the inner brim portion 36 as shown in Figure 8.

Further, as shown in Figure 8, the rubber sealing portion 39 is provided with an axis-orthogonal wall portion 44 having the sliding portion So on an inner peripheral edge, and the axis-orthogonal wall portion 44 is supported by an axis-orthogonal supporting metal 45 on a low-pressure side E. The inner peripheral edge 45a, circular and formed as a flat washer, uniformly supports the whole periphery of the back face (low-pressure side E) of the axis-orthogonal wall portion 44 of the rubber sealing portion 39. Therefore, the rubber lip portion 33 is disposed on the inner peripheral edge side along the axis-orthogonal face 43 and having extremely small pressure-receiving area.

Although contact pressure on the rotation shaft 32 can be sufficiently decreased in the rotation shaft seal 41 having a construction shown in Figure 8 in comparison with the seal of Figure 3C, following problems were recently revealed.

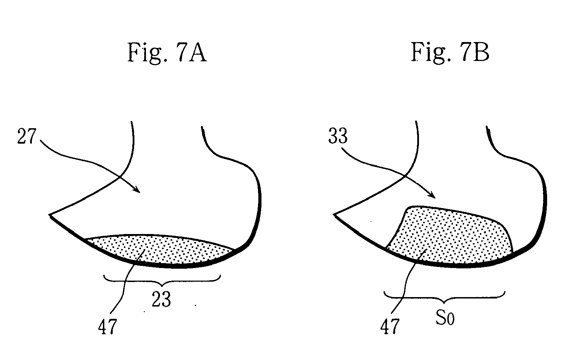

That is to say, a conventional cooling medium, HFC134a is being abolished in compressors etc. for air conditioners on cars, and compressors using CO₂ as cooling medium for next generation are being developed. Operation pressure of the cooling medium CO₂ is approximately ten times higher or more than that of the conventional cooling medium HFC134a. It was revealed that a large abraded area 47 is generated as indicated with dots in Figure 7B on the rubber lip portion 33 under the operational condition of this high pressure.

In other words, the lip portion 33, sliding on the rotation shaft 32 in high-speed rotation, is greatly deformed by receiving the pressure of the cooling medium, heat generation is increased, abrasion rapidly progresses, and operational life of the seal is made short.

It is therefore an object of the present invention to provide a rotation shaft seal, with which all of the above-described problems of the conventional rotation shaft seals are solved, abrasion amount and heat generation are decreased, and the life of the seal is extended.

This object is solved according to the present invention by rotation shaft seal including the features of claim 1. Furthermore detailed embodiments are described in dependent claims 2 and 3.

The present invention will be described with reference to the accompanying drawings in which:
Figure 1 is a cross-sectional view of a principal portion showing an embodiment of the present invention;
Figure 2 is a front view showing an embodiment of a principal part (back-supporting metal);
Figures 3A, 3B, and 3C are explanatory cross-sectional views to compare configurations and working of the present invention and the conventional example, and to explain working of the present invention;
Figure 4A is an explanatory perspective view to explain a principal portion and working;
Figure 4B is an explanatory graph to explain the principal portion and working;
Figures 5 is a front view of a principal part showing another embodiment;
Figures 6A is an enlarged longitudinal cross-sectional view showing a principal part;
Figures 6B is an enlarged longitudinal cross-sectional view showing a principal part;
Figure 7A is a cross-sectional view of a principal portion showing experimental result of the present invention;
Figure 7B is a cross-sectional view of a principal portion showing experimental result of a conventional example; and
Figure 8 is a cross-sectional view of a principal portion showing ter conventional example.

Preferred embodiments of the present invention will now be described with reference to the accompanying drawings.

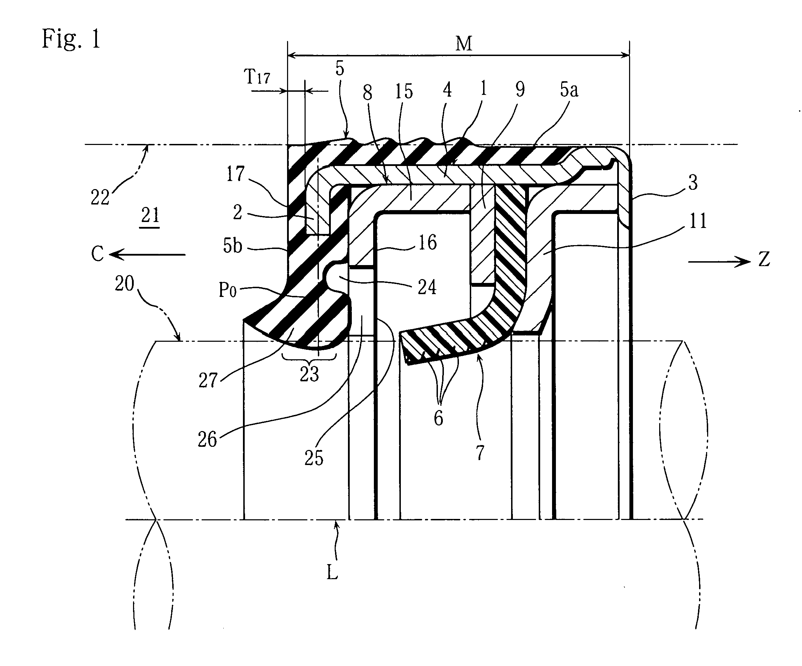

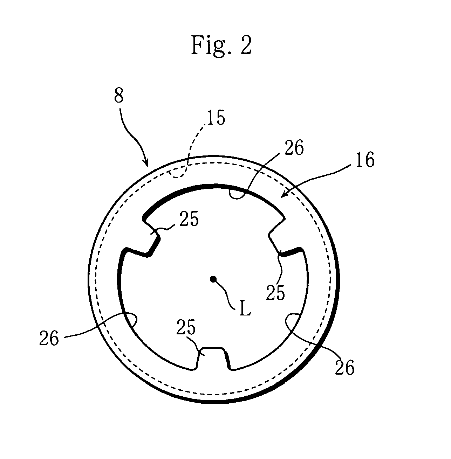

Figures 1, 2, 3A, and 3B show an embodiment of the present invention. Figure 1 is a longitudinal cross-sectional view, Figure 2 is a front view of a principal part, and Figures 3A and 3B are longitudinal cross-sectional views to explain working of a principal portion. This rotation shaft seal is, for example, for sealing high-pressure cooling media on a sealed fluid chamber 21 side. A half cross section of the rotation shaft seal is shown in Figures 1, 3A, and 3B, and Figure 1 shows free state (unattached state). And, a rotation shaft 20 and a housing (casing) 22 are shown with two-dot broken lines. And, solid lines in Figures 3A and 3B show pressure-receiving state (described later) in which the seal is placed between the rotation shaft 20 and the housing 22.

In Figure 1, a mark 1 represents an outer case having inner brim portions 2 and 3, and rubber sealing portion 5 is unitedly fixed to a peripheral face of a cylindrical wall portion 4 of the outer case 1 and both of front and rear faces of the inner brim portion 2 on a sealed fluid side C (the sealed fluid chamber 21 side) by adhesion, welding, or heat molding. A seal element 7 with a spiral groove 6 is disposed on an opposite side Z (also mentioned as low-pressure side or atmosphere side) to the sealing portion 5. The seal element 7 is preferably composed of fluororesin such as PTFE.

A mark 8 represents a back face supporting metal 8 which is approximately L-shaped in cross section, serving also as a so-called inner case, and composed of a cylindrical plate portion 15 fit to the inner peripheral face of the cylindrical wall portion 4 of the outer case 1 and an axis-orthogonal plate portion 16 at right angles with the axis L.

The back face supporting metal 8, an inner case 9 of I-shaped cross section, the seal element 7, and an inner member 11 of L-shaped cross section are serially layered and fixed to the inner brim portions 2 and 3.

The rubber sealing portion 5 is provided with a cylindrical cover portion 5a, having a concavo-convex wave portion (in free state) to elastically touch the inner peripheral face of the housing 22 for sealing work, and an axis-orthogonal wall portion 5b having an inner brim cover portion of U-shaped cross section, covering the front and rear faces of the inner brim portion 2, on a peripheral side, and a sliding portion 23, touching the surface of the rotation shaft 20, on an inner peripheral edge.

As described above, the axis-orthogonal wall portion 5b is formed as to be at right angles with the axis L, extended from the inner brim cover portion covering the inner brim portion 2 of the outer case 1 inward in radius direction, and having the sliding portion 23 on the inner peripheral edge.

The axis-orthogonal plate portion 16 of the back face supporting metal 8 supports the axis-orthogonal wall portion 5b of the rubber sealing portion 5 from the low-pressure side Z. And, a ring concave groove 24 is formed on the low-pressure side Z (back face side) of the axis-orthogonal wall portion 5b. Although the ring concave groove 24 has a function to prevent compressed rubber under pressure-receiving state of the axis-orthogonal wall portion 5b from excessively flowing inward (refer to Figure 3A), the concave groove 24 may be occasionally omitted in the present invention.

As described above with Figure 1, the outer case 1 has the inner brim portion 2 on the inner end portion on the sealed fluid side C, and the sliding portion 23 is disposed on an axis-orthogonal face P₀ including the inner brim portion 2.

That is to say, the inner brim portion 2 has a (small) thickness, and plural axis-orthogonal faces P₀ exist with an interval in the axis direction for the (small) thickness. A position in the axis direction of the sliding portion 23 is disposed on one of the axis-orthogonal faces P₀. The position in the axis direction of the sliding portion 23 is defined as a center of gravity G of contact pressure P on a position sliding on the rotation shaft 20 under the maximum operational pressure (refer to Figure 3A).

Although not shown in Figures, the position in the axis direction of the sliding portion 23 may be preferably disposed near the axis-orthogonal face P₀. "Near" means deviation within five times of the thickness of the inner brim portion 2.

In other words, the position in the axis direction of the sliding portion 23 is disposed within an inner dimension M of the outer case 1 in the axis direction. The inner dimension M in the axis direction is defined as a dimension including (together with) a thickness dimension T₁₇ of the rubber covering layer 17 covering the inner brim portion 2 on the sealed fluid side C.

Next, a remarkable characteristic of the present invention is described. As shown in Figures 1, 2, 3A, and 3B, the inner peripheral edge of the axis-orthogonal plate portion 16 of the back face supporting metal 8 is formed concavo-convex. In Figures, three protruding portions 25 are disposed on the inner peripheral edge to form concave portions 26 between the neighboring protruding portions 25.

As shown in Figure 3A, the hammer-shaped lip portion 27 having the sliding portion 23 is sufficiently supported by the protruding portion 25 on the peripheral position where the protruding portion exists, and hardly deformed toward the right side in Figure 3A (the low-pressure side Z).

However, on the peripheral position where the protruding portion 25 does not exist, as shown in Figure 3B, the hammer-shaped lip portion 27 without support is greatly deformed toward the right side in Figure 3A (the low-pressure side Z).

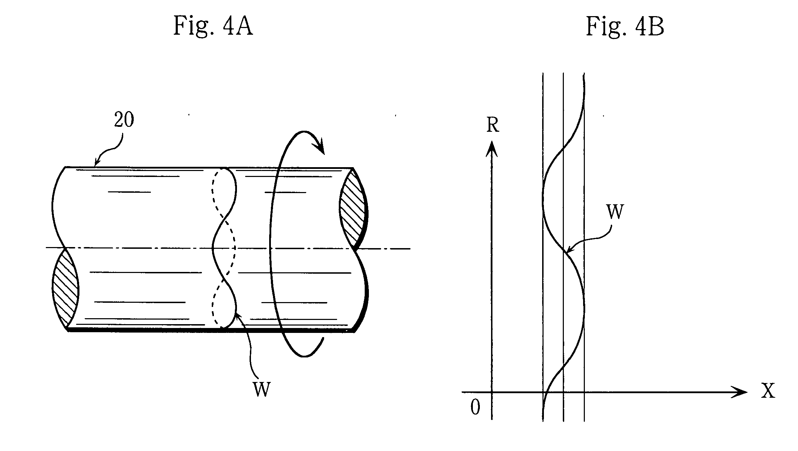

Therefore, the sliding portion 23 draws a concavo-convex wave pattern W as shown in Figure 4A. That is to say, the center of gravity G of the contact pressure P of the sliding portion 23 changes along the periphery as to draw waves along the peripheral face of the rotation shaft 20. Figure 4B is a graph in which the position X in the axis direction is shown on the axis of abscissa and a position R in peripheral direction is shown on the axis of ordinate. The sliding portion 23, accurately, the center of gravity G of the contact pressure P, where the sliding portion 23 is pressed to the surface of the rotation shaft 20, changes in the axis direction as to draw the concavo-convex wave pattern W. In other words, supporting force of the axis-orthogonal plate portion 16 of the supporting metal 8 supporting the axis-orthogonal wall portion 5b from the low-pressure side is increased and decreased along the peripheral direction as the position of the sliding portion 23 draws the concavo-convex wave pattern W along the peripheral direction on the surface of the rotation shaft 20 in the pressure-receiving state.

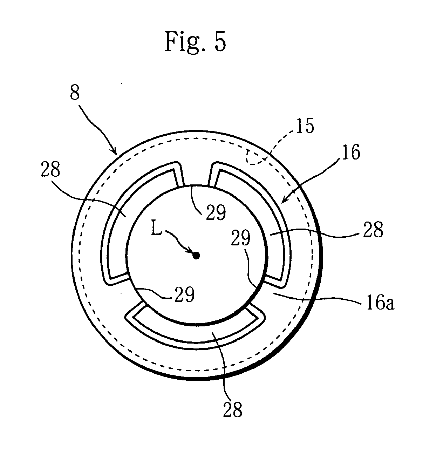

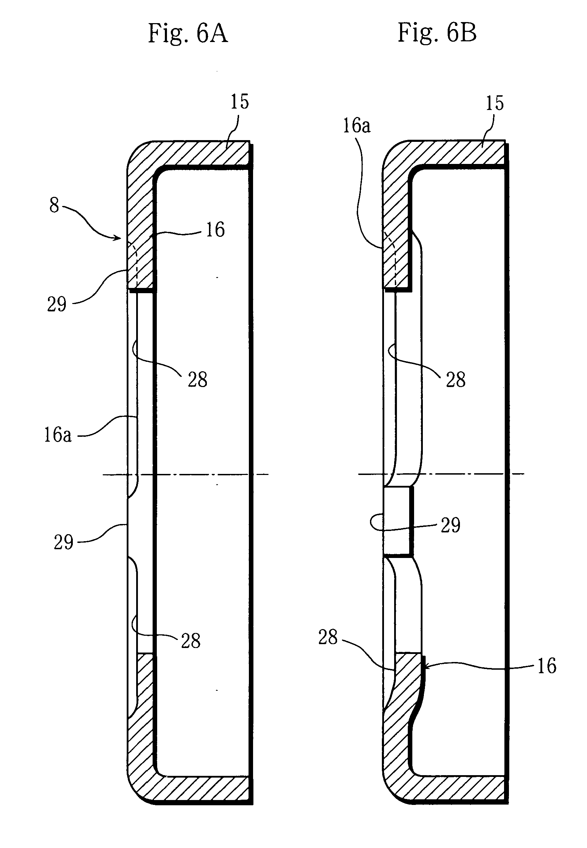

Next, Figures 5 and 6A show another embodiment. Figure 5 is a front view of the back face supporting metal 8 as a part of the principal portion, and Figure 6A is an enlarged longitudinal cross-sectional view of Figure 5.

In the supporting metal 8, as clearly shown in comparison with the above-described embodiment (refer to Figures 1 and 2), three (arc-shaped) concave portions 28 are formed along the peripheral direction by cutting, etc. on a sealing portion supporting face 16a where the axis-orthogonal plate portion 16 supports the axis-orthogonal wall portion 5b of the sealing portion 5 from the low-pressure side Z, and concavo-convex portions are formed on the inner peripheral edge of the supporting face 16a. That is to say, convex portions 29 are composed of parts where the supporting face 16a remains, and the concave portions 28 are composed of slightly cut (shaved) parts. Other constructions are same as that of the above-described embodiment in Figures 1 and 2.

Figure 6B shows a modification. Although same as Figure 5 in front view, keeping the thickness (of the plate) dimension, three concave portions 28 are formed along the peripheral direction on the inner peripheral edge of the sealing portion supporting face 16a of the axis-orthogonal plate portion 16 by press work to form concavo-convex portions. That is to say, convex portions 29 are composed of parts where the supporting face 16a remains, and the concave portions 28 are composed by slight plastic deformation. Other constructions are same as that of the above-described embodiment in Figures 1 and 2.

The number of the concave portions 28 may be 2 or more than 4 in Figures 5, 6A, and 6B.

In Figures 5, 6A, and 6B under an attached operational pressure-receiving state, the lip portion 27 of birdhead shape having the sliding portion 23 (refer to Figure 1) is supported by the convex portion 29, deformation toward the low-pressure side Z is prevented as in Figure 3A, and deformation is hardly generated.

On the contrary, on the position of the concave portion 28, the lip portion 27 deforms as to intrude to the concave portion 28 toward the low-pressure side Z.

Therefore, the sliding portion 23 (refer to Figure 1) draws a concavo-convex wave pattern W as shown in Figure 4A, the center of gravity G of contact pressure P (refer to Figure 3A) changes according to the position in the peripheral direction as to draw a wave on the periphery along the peripheral face of the rotation shaft 20. That is to say, the concavo-convex wave pattern W is drawn as shown in Figure 4B.

To sum up, in the embodiment of Figures 5, 6A, and 6B, the concavo-convex portions are formed along the peripheral direction on the sealing portion supporting face 16a of the axis-orthogonal plate portion 16 of the back face supporting metal 8 as the configuration of the sliding portion 23 of the lip portion 27 becomes concavo-convex wave along the peripheral direction on the surface of the rotation shaft 20 under the pressure-receiving state.

It is also preferable to combine the embodiment of Figures 1 and 2 and the embodiment of Figures 5, 6A, and 6B. That is to say, the concave portion 26 may be formed by cutting the inner peripheral edge on the concave portion 28 in Figures 5, 6A, and 6B for a small dimension in radius direction in comparison with Figures 1 and 2.

Comparison experiment was conducted to compare the product of the present invention shown in Figures 1 and 2 with the conventional example of Figure 8 under the condition of pressure of 4.0MPa, fluid temperature of 100 °C, and sliding speed of the sliding portion of 4.6m/sec. Abrasions on the sliding portions 23 and So are respectively shown in Figures 7A and 7B.

As shown in Figure 7B with dots, an abraded portion 47 after 10 hours is extremely large. On the contrary, in the product of the present invention, an abraded portion 47 after 17 hours is small as shown in Figure 7A.

In the conventional example, the sliding portion So is on the axis-orthogonal face 43, oil film is hardly generated, amount of heat generation is large, and large abrasion was resulted thereby. On the contrary, in the product of the present invention, sliding on the concavo-convex wave W as shown in Figures 4A and 4B, oil film is easily generated, heat radiation is enhanced, abrasion amount of the sliding portion 23 of the lip portion 27 is reduced, and durability is improved thereby.

In the present invention, modifiable to embodiments other than the above-described embodiments, an inner peripheral edge 45a may be formed on the axis-orthogonal supporting metal 45 in the conventional example shown in Figure 8 as to be concavo-convex like the axis-orthogonal plate portion 16 in Figures 1 and 2, or a concave portion 28 may be formed as in Figure 6 (not shown in Figures). And, two or more seal elements 7 may be disposed, the seal element 7 may be omitted, and, configuration of the supporting metal 8, number and configuration of the inner case 9 and the inner member 11 may be freely changed.

In the present invention, lubricant oil (sealed fluid) is introduced to the portion between the sliding portion 23 and the rotation shaft 20 where the sliding portion 23 is moved to the low-pressure side Z, the lubricant oil (sealed fluid) is spread over the entire periphery of the sliding portion 23 along the rotation of the rotation shaft 20, friction heat generation and early abrasion are prevented, and the seal is made long-life because the rotation shaft seal, provided with the rubber sealing portion 5 having the axis-orthogonal wall portion 5b, having the sliding portion 23 which contacts the surface of the rotation shaft 20 on the inner peripheral edge, and the back face supporting metal 8 having the axis-orthogonal plate portion 16 which supports the axis-orthogonal wall portion 5b from the low-pressure side, is constructed as that the inner peripheral edge of the axis-orthogonal plate portion 16 of the back face supporting metal 8 is formed concavo-convex, and the sliding portion 23 is made the concavo-convex wave W along the peripheral direction on the surface of the rotation shaft 20 under the pressure-receiving state. Especially, the seal having excellent durability is appropriate for sealing high-pressure gas of compressors for car air conditioners.

And, in the present invention, lubricant oil (sealed fluid) is introduced to the portion between the sliding portion 23 and the rotation shaft 20 where the sliding portion 23 is moved to the low-pressure side Z, the lubricant oil (sealed fluid) is spread over the entire periphery of the sliding portion 23 along the rotation of the rotation shaft 20, friction heat generation and early abrasion are prevented, and the seal is made long-life because the rotation shaft seal, provided with the rubber sealing portion 5 having the axis-orthogonal wall portion 5b, having the sliding portion 23 which contacts the surface of the rotation shaft 20 on the inner peripheral edge, and the back face supporting metal 8 having the axis-orthogonal plate portion 16 which supports the axis-orthogonal wall portion 5b from the low-pressure side, is constructed as that the concavo-convex portion is formed on the sealing portion supporting face 16a of the axis-orthogonal plate portion 16 of the back face supporting metal 8 along the peripheral direction, and the sliding portion 23 is made the concavo-convex wave W along the peripheral direction on the surface of the rotation shaft 20 under the pressure-receiving state. Especially, the seal having excellent durability is appropriate for sealing high-pressure gas of compressors for car air conditioners. And, depth of the concavo-convex portion to be formed on the sealing portion supporting face 16a can be relatively easily set (made) according to operational pressure and configurations of the lip portion 27, and the seal can correspond to operational conditions with flexibility.

## Claims

1. A rotation shaft seal provided with a rubber sealing portion (5) having an axis-orthogonal wall portion (5b), having a sliding portion (23) which contacts a surface of a rotation shaft (20) on an inner peripheral edge, and a back face supporting metal (8) having an axis-orthogonal plate portion (16) which supports the axis-orthogonal wall portion (8) from a low-pressure side, comprising a construction in which supporting force of the axis-orthogonal plate portion (16) supporting the axis-orthogonal wall portion (5b) from the low-pressure side is increased and decreased along a peripheral direction as position of the sliding portion (23) draws a concavo-convex wave pattern (W) along the peripheral direction on the surface of the rotation shaft (20) under a pressure-receiving state.

2. The rotation shaft seal as set forth in claim 1, wherein an inner peripheral edge of the axis-orthogonal plate portion (16) of the back face supporting metal (8) is formed concavo-convex.

3. The rotation shaft seal as set forth in claim 1, wherein a concavo-convex portion is formed on a sealing portion supporting face (16a) of the axis-orthogonal plate portion (16) of the back face supporting metal (8) along the peripheral direction.
